Europäisches Patentamt

European Patent Office

Office européen des brevets

(19)

(11) **EP 1 411 627 A2**

(12) **EUROPEAN PATENT APPLICATION**

(43) Date of publication:
21.04.2004   Bulletin 2004/17

(51) Int Cl.[7]: **H02P 6/10**

(21) Application number: 03256524.4

(22) Date of filing: 16.10.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 16.10.2002 JP 2002301387

(71) Applicant: **JAPAN SERVO CO. LTD.**
**Chiyoda-Ku Tokyo (JP)**

(72) Inventors:
 • **Ohiwa, Shoji c/o Japan Servo Co., Ltd.**
 **Kiryu-shi Gunma-ken (JP)**

 • **Kitamura, Masashi c/o Hitachi Ltd.**
 **Ibaraki-ken (JP)**
 • **Higo, Asahi c/o Japan Servo Co., Ltd.**
 **Kiryu-shi Gunma-ken (JP)**
 • **Mimura, Masahiro c/o Japan Servo Co., Ltd.**
 **Kiryu-shi Gunma-ken (JP)**

(74) Representative: **Sutcliffe, Nicholas Robert et al**
 **Mewburn Ellis,**
 **York House,**
 **23 Kingsway**
 **London WC2B 6HP (GB)**

(54) **Brushless DC motor arrangement for reducing torque ripple**

(57)     A brushless DC motor for driving a fan or the like, wherein the brushless DC motor comprises: a stator core; motor coils wound around the stator core; a rotor core supported rotatably with respect to the stator core; a rotor magnet attached to the rotor core, which is magnetized into a multi-pole so that the waveform of a resultant counter electromotive force generated on the motor coils has a sine wave-like shape, and faces the stator core across an uneven space so that the waveform of a resultant cogging torque has a cosine wave-like shape having twice the rotation cycle with respect to the sine wave of the waveform of the counter electromotive force; a magnetic pole position detector that detects magnetic pole positions of the rotor magnet, and is disposed at a position where the resultant waveform of an output signal from the detector has a sinewave-like shape; and a drive unit that amplifies the output signal of the magnetic pole position detector so that the maximum value of an exciting torque to excite the motor coils is substantially twice of the maximum value of the cogging torque.

FIG. 3

EP 1 411 627 A2

## Description

The present invention relates to a brushless DC motor used for driving a fan or the like.

In conventional single-phase brushless DC motors for driving fans, the manufacturing cost is reduced by simplifying the structure thereof. That is, it is arranged so that the number of magnetic poles of a rotor magnet and the number of teeth of a stator core are four or so respectively, one hall device is used as a magnetic sensor for detecting magnetic pole positions of the rotor magnet, and motor coils of single-phase are excited alternately by a semiconductor element to rotate the rotor.

Also, an uneven space is provided between each of the salient-poles of the teeth and the rotor magnet, and the magnetization of the rotor magnet is arranged so that the positions of the points where a cogging torque is zero are dislocated, thereby a dead point is prevented from being generated.

Further, it is designed so that, in a range where the electrical angle is 0-90°, the waveform of a resultant counter electromotive force is substantially a sine wave, and in a range where the electrical angle is 90-180°, the waveform of the resultant counter electromotive force is substantially a trapezoidal waveform; thereby torque ripple which causes vibration and for noise is reduced.

However, in the single-phase brushless DC motor as described above, it is difficult to satisfactorily reduce the torque ripple.

An obj ect of the present invention is to provide a brushless DC motor in which torque ripple during running is small.

In one aspect of the present invention, a brushless DC motor includes: a stator core; motor coils wound around the stator core; a rotor core supported rotatably with respect to the stator core; a rotor magnet attached to the rotor core, which is magnetized into a multi-pole so that the waveform of a resultant counter electromotive force generated on the motor coils has a sine wave-like shape, and faces the stator core across an uneven space so that the waveform of a resultant cogging torque has a cosine wave-like shape having twice the rotation cycle with respect to the sine wave of the waveform of the counter electromotive force; a magnetic pole position detector that detects magnetic pole positions of the rotor magnet, and is disposed at a position where the resultant waveform of an output signal from the detector has a sine wave-like shape; and a drive unit that amplifies the output signal of the magnetic pole position detector so that the maximum value of an exciting torque to excite the motor coils is substantially twice of the maximum value of the cogging torque.

In the above-described brushless DC motor, it is possible to fix the rotation torque to a substantially constant value, and thus torque ripple during running can be made to be satisfactorily small.

Fig. 1 shows a structure of a motor main body of a single-phase brushless DC motor for driving a fan according to the present invention;

Fig. 2 is a diagram schematically showing a drive circuit of the single-phase brushless DC motor shown in Fig. 1;

Fig. 3 is a graph showing changes of torques and counter electromotive force with respect to electrical angle of the single-phase brushless DC motor according to the invention;

Fig. 4 is a diagram schematically showing a drive circuit of another single-phase brushless DC motor according to the invention;

Fig. 5 is a graph showing changes of torques and counter electromotive force with respect to electrical angle of the single-phase brushless DC motor according to the invention;

Fig. 6 is a graph showing changes of torques and counter electromotive force with respect to electrical angle of the single-phase brushless DC motor according to the invention; and

Fig. 7 is a graph showing changes of torques and counter electromotive force with respect to electrical angle of the single-phase brushless DC motor according to the invention.

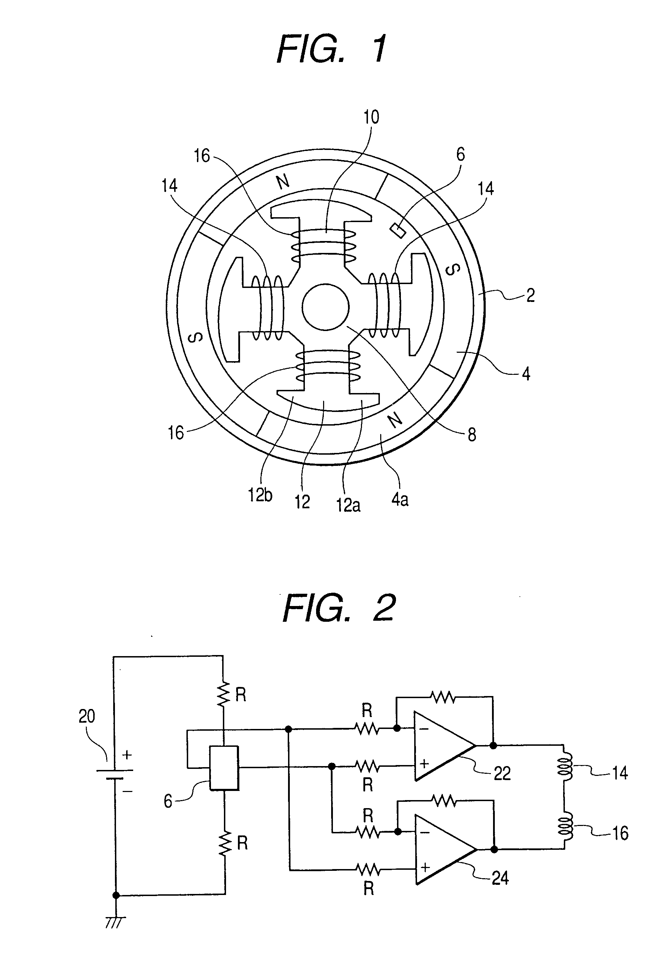

Fig. 1 shows a structure of a motor main body of a single-phase brushless DC motor for driving a fan according to an embodiment of the present invention. A stator core 8, which is formed by piling up punched out silicon steel plates, is provided with four teeth 10. Salient-poles 12 are provided to the teeth 10, and the teeth 10 are wound with motor coils 14, 16, respectively. A rotor core 2 is supported rotatably with respect to the stator core 8. A ring-like rotor magnet 4 is fixed to the rotor core 2, and the rotor magnet 4 is magnetized into four poles so that the waveform of a counter electromotive force e, which is generated on the motor coils 14, 16 by the rotation of the rotor core 2, has a sine wave-like shape. Also, a hall device 6 for detecting magnetic pole positions of the rotor magnet 4 is provided. The hall device 6 is mounted on a printed circuit board (not shown) , and is disposed at a position that is adjacent to the rotor magnet 4 such that the magnetic flux distribution changes with a sine wave-like shape. That is, an output voltage of the hall device 6 takes a value corresponding to the positional relationship between the hall device 6 and the rotor magnet 4 . The output voltage of the hall device 6 is resulted in a value proportional to $\sin\theta$, when the electrical angle is represented by $\theta$. Each of the salient-poles 12 has a portion 12a where the space between the rotor magnet 4 and the same is narrower and a portion 12b where the space therebetween is wider. Accordingly, the space between each of the salient-poles 12 and the rotor magnet 4 is not even but uneven. That is, the rotor magnet 4 faces the stator core 2 across an uneven space or gap so that the waveform of a resultant cogging torque Tc has a cosine wave-like waveform having twice the rotation cycle or frequency with respect to the sine wave of the waveform of the counter electromotive force e.

Fig. 2 is a diagram schematically showing a drive circuit of the single-phase brushless DC motor shown in Fig. 1. A DC power supply 20 is connected to power supply terminals of the hall device 6 which is interposed between resistances R. Motor coils 14 and 16 are connected to output terminals of the hall device 6 being interposed by an amplifier 22 and an amplifier 24, respectively. A voltage corresponding to the output voltage of the hall device 6 is applied to the motor coils 14 and 16 via the amplifiers 22 and 24 to excite the motor coils 14 and 16. The amplifier 22 and the amplifier 24 are arranged so that the phases of the output voltages thereof are different by 180° from each other. Also, the amplifiers 22 and 24 amplify the output voltage of the hall device 6 so that the maximum value of the exciting torque Te to excite the motor coils 14 and 16 is substantially twice of the maximum value C of the cogging torque Tc.

In the single-phase brushless DC motor shown in Fig. 1 and Fig. 2, in the state where the motor coils 14 and 16 are not being excited, the positional relationships between the poles of the rotor magnet 4 and the salient-poles 12 of the teeth 10 are arranged so as to be as shown in Fig. 1. The magnetic pole central portions 4a of the rotor magnet 4 face to the portions 12a of the salient-poles 12. From this state, when the motor coils 14 and 16 are excited via the amplifiers 22 and 24 corresponding to the output voltage of the hall device 6, a rotation torque T is generated between the salient-poles 12 of the teeth 10 and the rotor magnet 4 causing the rotor core 2 to rotate counterclockwise in Fig. 1. Accordingly, the point, where the cogging torque Te is not generated between the salient-poles 12 and the rotor magnet 4, and the point, where the rotation torque T is not generated, can be made to be out of alignment. Therefore, there is no point where the motor main body cannot be activated.

Further, since the rotor magnet 4 is magnetized so that the waveform of the counter electromotive force e has a sine wave-like shape, assuming that the maximum value of the counter electromotive force e is represented by B, the counter electromotive force e is expressed by the following formula.

$$e = B \sin\theta \qquad (1)$$

Since the rotor magnet 4 faces the stator core 8 across an uneven space so that the waveform of the cogging torque Tc has a cosine wave-like shape having twice the rotation cycle with respect to the sine wave of the waveform of the counter electromotive force e, the cogging torque Tc is expressed as Tc = C cos2θ. By converting the above, it is expressed by the following formula.

$$Tc = C (\cos^2\theta - \sin^2\theta) \qquad (2)$$

Since, the phases of the output voltages of the amplifier 22 and the amplifier 24 are different by 180° from each other, the resultant currents flowing through the motor coils 14 and 16 have a bipolar excitation in which the directions thereof alternate one after the other. An output voltage E1 of the amplifier 22 depends on the output voltage of the hall device 6 and the amplifier gain. Assuming that the maximum value of the output voltage of the amplifier 22 is represented by A, the output voltage E1 is expressed as E1 = A sinθ. Also, likewise, an output voltage E2 of the amplifier 24 is expressed as E2 =

- A sinθ. Accordingly, a voltage E applied to the motor coils 14 and 16 is expressed by the following formula.

$$E = 2A \sin\theta \qquad (3)$$

A current i flowing through the motor coils 14 and 16 is expressed by the following formula, when a resistance of the motor coils 14 and 16 is represented by r.

$$i = (E - e)/r \qquad (4)$$

The resultant exciting torque Te generated by the excitation is Te=iKt, when the motor torque constant is represented by Kt, the motor torque constant Kt is proportional to the counter electromotive force constant Ke, and the counter electromotive force constant Ke is proportional to the counter electromotive force e. Thus, when the proportional constant is represented by K, since the exciting torque Te is expressed as Te=Kie, the exciting torque Te is expressed by the following formula.

$$Te = K ((2AB - B^2)/r) \sin^2\theta \qquad (5)$$

Here, since the amplifiers 22 and 24 amplify the output voltage of the hall device 6 so that the maximum value of the exciting torque Te is substantially twice of the maximum value C of the cogging torque Tc, the following formula is established.

$$K ((2AB - B^2)/r) = 2C \qquad (6)$$

As a result, since the rotation torque T is: T = Te + Tc, the rotation torque T is expressed by the following formula, and the rotation torque T takes a

constant value.

$$T = 2C \sin^2\theta + C (\cos^2\theta - \sin^2\theta) = C \qquad (7)$$

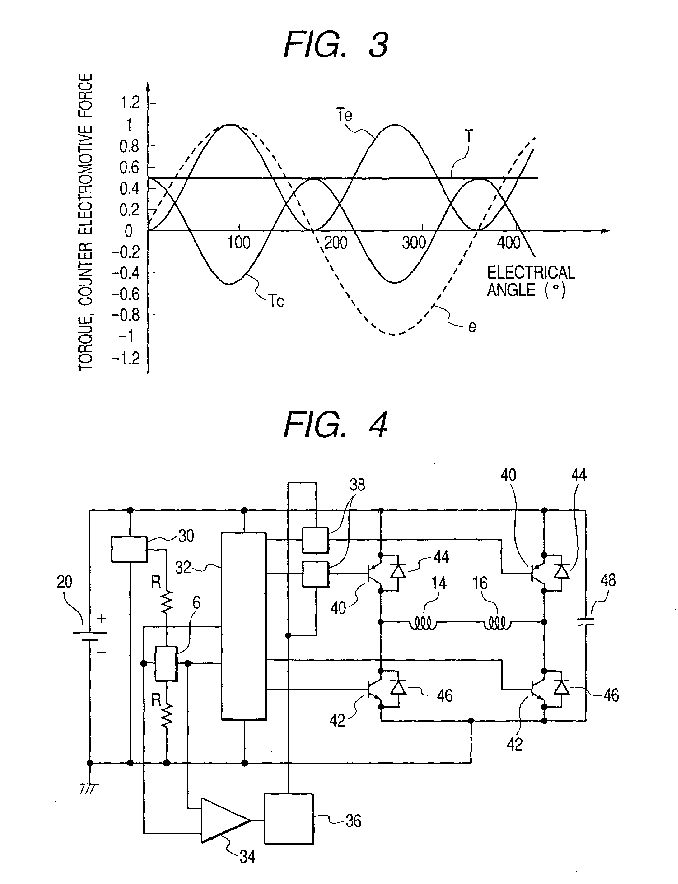

Fig. 3 is a graph showing the changes of the torques Tc, Te and T, and the counter electromotive force e with respect to the electrical angle θ, which are calculated using the above formula assuming that B = 1, and C = 1/2. It is understood that rotation torque T, which is a sum of the exciting torque Te = $\sin^2\theta$ and the cogging torque Tc = $(\cos 2\theta)/2$, is constant. Accordingly, since torque ripple while the single-phase brushless DC motor is running can be reduced, the blade vibration of the fan and sympathetic vibration of the frame can be eliminated resulting in a large reduction of noise of the fan.

Fig. 4 is a diagram schematically showing a drive circuit of another single-phase brushless DC motor according to an embodiment of the invention. A constant voltage circuit 30 is connected to a power supply 20, and power supply terminals of a hall device 6 are connected to the constant voltage circuit 30 , a resistance R being interposed there between. Motor coils 14 and 16 are connected to power transistors 40 and 42 which are connected to an H-bridge, circulating diodes 44 and 46 are connected in parallel with the power transistors 40 and 42, respectively, and a capacitor 48 is connected to the power transistors 40 and 42. A motor drive IC 32 performs a bipolar excitation on the motor coils 14 and 16 based on the output voltage of the hall device 6. An amplifier 34 amplifies the output voltage of the hall device 6. A PWM (pulsed wave modulation)generation circuit 36 inputs the amplified output voltage of the hall device 6 from the amplifier 34 to generate PWM pulse in which the duty ratio of the PWM carrier frequency is changed into a sine wave-like shape. The PWM circuit 38 excites the upper arm power transistor 40 on the H-bridge constitution based on the PWM pulse output from the PWM generation circuit 36. The drive circuit amplifies the output voltage of the hall device 6 so that the maximum value of the exciting torque Te is substantially twice of the maximum value C of the cogging torque Tc to excite the motor coils 14 and 16.

The PWM control circuit, which changes the on-duty of the exciting signal based on the output signal of the magnetic pole position detector, comprises the PWM generation circuit 36 and the PWM circuit 38 . Also, the excitation circuit having a group of power transistors, which excites the motor coils based on the exciting signal, comprises power transistors 40, 42 and so on.

In the drive circuit, even for a relatively large fan motor, it is made possible to supply sine wave-like current, which is a requirement for reducing the torque ripple, to the motor coils 14 and 16, and it is possible to effectively reduce the torque ripple without increasing the loss in the drive circuit.

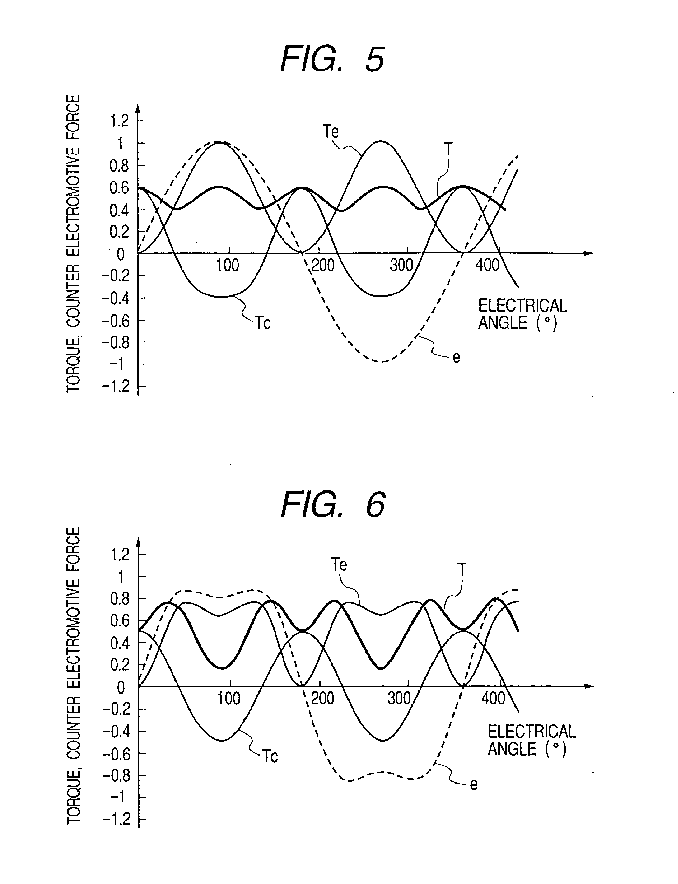

Fig. 5 is a graph, same as Fig. 3, showing the changes of the torques Tc, Te, T and the counter electromotive force e with respect to the electrical angle θ when 20% of secondary harmonic component is included in the waveform of the cogging torque Tc; that is, when the waveform deformation ratio of the cogging torque Tc is 20%. As demonstrated by the graph, the torque ripple ratio ΔT/Ta, which is the ratio between the ripple value ΔT and the average value Ta of the rotation torque T, is 40%. Accordingly, when the waveform deformation ratio of the cogging torque Tc is 20% or less, since the torque ripple while the single-phase brushless DC motor is running can be reduced, the vibration and noise of the fan can be reduced.

Fig. 6 is a graph showing the changes of the torques Tc, Te and T, and the counter electromotive force e with respect to the electrical angle θ when 20% of tertiary harmonic component is included in the waveform of the output voltage of the hall device 6 and the waveform of the counter electromotive force e; that is, when the waveform deformation ratio of the output voltage of the hall device 6 and the counter electromotive force e is 20%. As demonstrated by the graph, the torque ripple ratio is approximately 109%. In contrast, in a corresponding conventional case, when it is arranged that, in a range where the electrical angle of the rotor magnet is 0-90°, the waveform of the resultant counter electromotive force substantially a sine wave; and in a range where the electrical angle is 90-180°, the waveform of the resultant counter electromotive force is substantially a trapezoidal waveform, the torque ripple ratio is 125%. Accordingly, when the waveform deformation ratio of the output voltage of the hall device 6 and the waveform deformation ratio of the counter electromotive force e are 20% or less, the torque ripple can be improved.

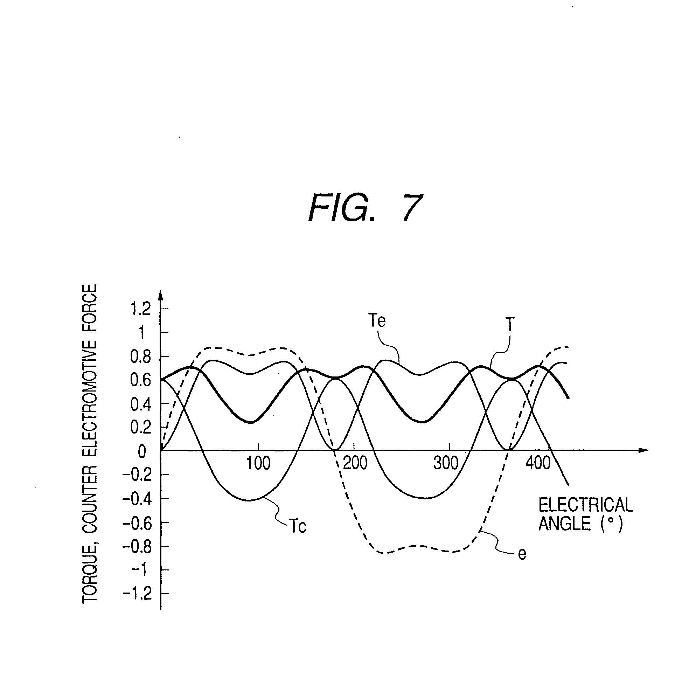

Fig. 7 is a graph showing the changes of the torques Tc, Te and T, and the counter electromotive force e with respect to the electrical angle θ when 20% of tertiary harmonic component is included in the waveform of the output voltage of the hall device 6 and the waveform of the counter electromotive force e, and when 20% of secondary harmonic component is included in the waveform of the cogging torque Tc. As demonstrated by the graph, the torque ripple ratio is approximately 82%, and is smaller than the torque ripple ratio in the case shown in Fig. 6. That is, even when a tertiary harmonic is included in the waveformof the output voltage of the hall device 6 and the waveform of the counter electromotive force e, so that the waveforms of the output voltage of the hall device 6 and the counter electromotive force e are trapezoidal waveform-like shapes, the torque ripple can be improved by changing the waveform of the cogging torque Tc into a cosine wave-like shape including a secondary harmonic.

As described above, the invention has been described taking a single-phase brushless DC motor of single-phase bipolar excitation as an example of the embodiment. The invention is also applicable likewise to a brushless DC motor of a 2-phase unipolar excitation having phase difference by 180°. Further, the drive unit is not limited to the drive circuits shown in Fig. 2 andFig. 4. Furthermore, amagneticpolepositiondetector other than the hall device may be used.

**Claims**

1. A brushless DC motor, comprising:

   a) a stator core;
   b) motor coils wound around said stator core;
   c) a rotor core supported rotatably with respect to said stator core;
   d) a rotor magnet attached to said rotor core, which is magnetized into a multi-pole so that the waveform of a resultant counter electromotive force generated on said motor coils has a sine wave-like shape, and faces said stator core across an uneven space so that the waveform of a resultant cogging torque has a cosine wave-like shape having twice the rotation cycle with respect to the sine wave of the waveform of said counter electromotive force;
   e) a magnetic pole position detector that detects magnetic pole positions of said rotor magnet, and is disposed at a position where the resultant waveform of an output signal from said detector has a sine wave-like shape; and
   f) a drive unit that amplifies said output signal of said magnetic pole position detector so that the maximum value of an exciting torque to excite said motor coils is substantially twice of the maximum value of said cogging torque.

2. The brushless DC motor according to claim 1, wherein said drive unit has amplifiers for amplifying the output signal of said magnetic pole position detector.

3. The brushless DC motor according to claim 1, wherein said drive unit includes a PWM control circuit that changes the on-duty of an exciting signal based on said output signal of said magnetic pole position detector and an excitation circuit comprised of a group of power transistors that excites said motor coils based on said exciting signal.

4. The brushless DC motor according to any one of the previous claims, wherein said brushless DC motor is a single-phase brushless DC motor.

5. The brushless DC motor according to any one of the previous claims, wherein said magnetic pole position detector is a hall device.

6. The brushless DC motor according to any one of the previous claims, wherein the waveform deformation ratio of said cogging torque is 20% or less.

7. The brushless DC motor according to any one of claims 1 to 5, wherein each of the waveform deformation ratio of said output signal of said magnetic pole position detector and the waveform deformation ratio of said counter electromotive force is 20% or less.

8. The brushless DC motor according to any one of the previous claims, wherein the waveform of said cogging torque is adapted into a cosine wave including a secondary harmonic.

# FIG. 1

# FIG. 2

## FIG. 3

## FIG. 4

## FIG. 5

## FIG. 6

FIG. 7